# EUROPEAN PATENT APPLICATION

(11) **EP 1 383 352 A1**
(43) Date of publication of application: **21.01.2004**
(21) Application number: 03101896.3
(22) Date of filing: 26.06.2003
(51) Int. Cl.: H04Q 7/38, H04Q 7/32

(54) **Management system for SIM cards**

(30) Priority: 28.06.2002 FI 20021292
(71) Applicant: Radiolinja Origo Oy, 02240 Espoo (FI)
(72) Inventor: Jokela, Jari, 00810, HELSINKI (FI); Leskinen, Anssi, 02230, Espoo (FI); Englund, Sari, 02860, ESPOO (FI)
(74) Representative: Savela, Antti-Jussi

(57) **Abstract**

The invention is based on the idea that in some part of a data communication network there is a centralized data-base/information storage, wherein all SIM information is stored. The centralized database allows a more flexible management of SIMs, whereby invoicing, updating and other functions can be made very flexible and convenient. For management of the centralized database and as an interface to other systems there is a specific server.

## Description

### Field of the invention

The invention relates to the management of SIMs, that is, subscriber identity modules, of mobile phones and other such terminals.

### State of the art

Present-day technologies for management of SIMs (for example, for updating) are based on the OTA (Over The Air) system. The purpose of OTA is to manage SIMs over the air, for example, through the SMS (Short Message Service). The OTA system is usually connected to other systems, such as the GSM, GPRS (General Packet Radio System) or to systems of the third generation.

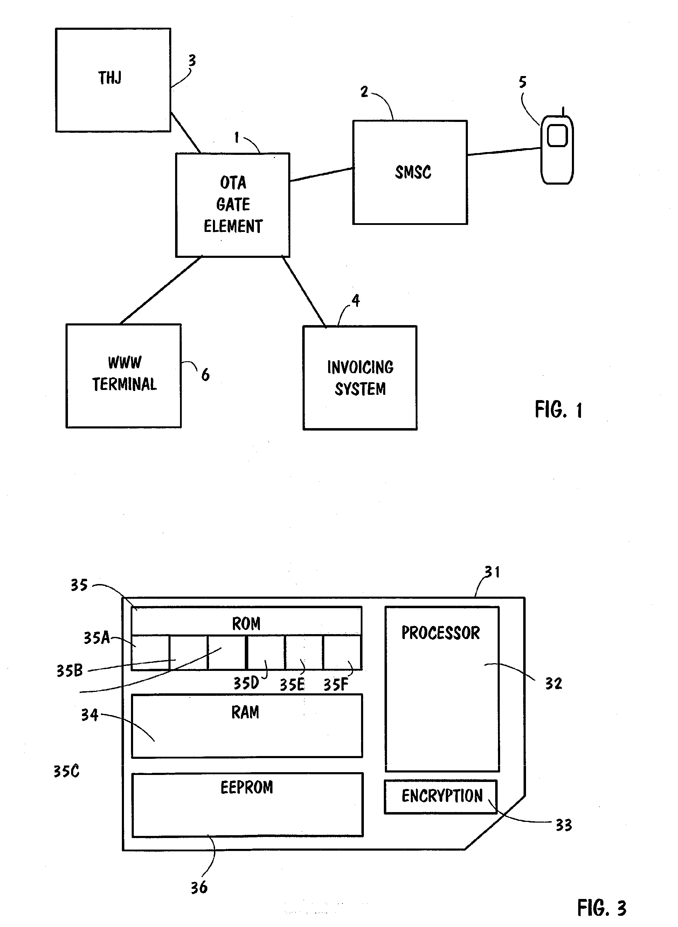

Figure 1 shows an example of state-of-the-art updating of SIMs. Gate element 1 of the OTA system converts updating messages arriving from a subscriber management system 3 into SMS messages according to the OTA system, and the SMS messages are relayed further into SMSC (Short Message Service Center) 2. SMSC again relays the updating messages as normal text messages to the SIM of the mobile phone 5 in question. The OTA gate element also attends to security factors.

It is also possible for the OTA gate element to be connected to the Internet, whereby updating instructions for SIMs can be given from WWW terminal 6. This makes it possible for the management personnel of the customer group to do service updatings concerning the group - such as, for example, when a big customer selling connections wishes to provide his own custom-made services to his own connection customers.

In addition, for management of SIMs it is also possible to use the STK (SIM ToolKit) technology. STK is a program which the operator uses to download, for example, new services from the operator's terminal into SIMs. STK services are menu-based, whereby every meny may have sub-menus.

Flexible and proper functioning of invoicing is a problen with the known solutions. If the OTA system is combined with the operator's invoicing system 4, Figure 1, then great changes must be made in the invoicing system. The OTA gate element will hereby send an invoicing ticket for the services used by mobile phone 5. However, the ticket does not contain all the necessary invoicing information for different situations, but only the basic information. This also concerns services rendered with the STK technology, whereby the services are in actual fact at the server of the party providing services. It is natural that this makes the invoicing complicated.

Another way of invoicing is to combine the invoicing with the invoicing used by the SMSC. It is hereby possible that each service has its own connection, that is, a channel and price bracket, that is, for one service call (the service call may actually include several services) many separate connections are formed, which are difficult to manage. According to another alternative, the service call has one price bracket only, but then the separate services contained in the service call cannot be distinguished from each other in the invoicing. Another problem is that data is transferred in short messages, the number of which may rise to hundreds, whereby invoicing is troublesome.

The known techniques pay no attention to the management of non-active SIMs. Non-active SIMs means such which are at the dealer's or in storage, that is, they are not associated with any connection number, such as, for example, MSISDN (Mobile Subscriber ISDN).

It is the purpose of this invention to eliminate the above-mentioned state-of-the-art problems. This is achieved by the means presented in the claims.

### Brief description of the invention

The invention is based on the idea that in some part of the data communication network there is a centralized database/data storage, wherein all SIM information is stored. The centralized database allows a more flexible management of SIMs, whereby it is possible to make the invoicing, updating and other functions very flexible and convenient. The management of the centralized database has its own server, also as an interface to other systems. The entity formed by the centralized database and the server controlling it constitutes a central functionality in the management of SIMs according to the invention.

In the method according to the invention, the SIM management server receives management commands (updating/service requests) sent from various terminals, such as a WWW browser. The received management commands are carried out, so that the SIM management server prepares them for transmission to the terminals (for example, mobile phones) containing the concerned SIMs. The SIM management server may use external servers to carry out the management commands. When the terminals containing SIMs have completed the management functions of the management commands, acknowledgement messages are formed of them and these are sent to the SIM management server. The management server receives the acknowledgement messages. When needed, the SIM data in the database is updated to correpond with the taken management steps. The database contains centralized information on the SIMs as well as price information concerning management functions. The SIM management server also receives log information of the network on the performed management function. Based on the log information and the price information an invoicing message is formed in the management server concerning the taken management steps, and this invoicing message is SIM-specific, that is, user-specific. The invoicing message is sent to the invoicing system, which is connected to the SIM management server.

### List of figures

In the following, the invention will be described in greater detail with the aid of the figures in the appended drawings, of which
- Figure 1: shows an example of a state-of-the-art arrangement and of updating of SIMs,
- Figure 2: shows an example of the arrangement according to the invention,
- Figure 3: shows an example of the content of a SIM,
- Figure 4: shows an example of information on SIM in a database, and
- Figure 5: is a flow diagram showing an example of the method according to the invention.

### Detailed description of the invention

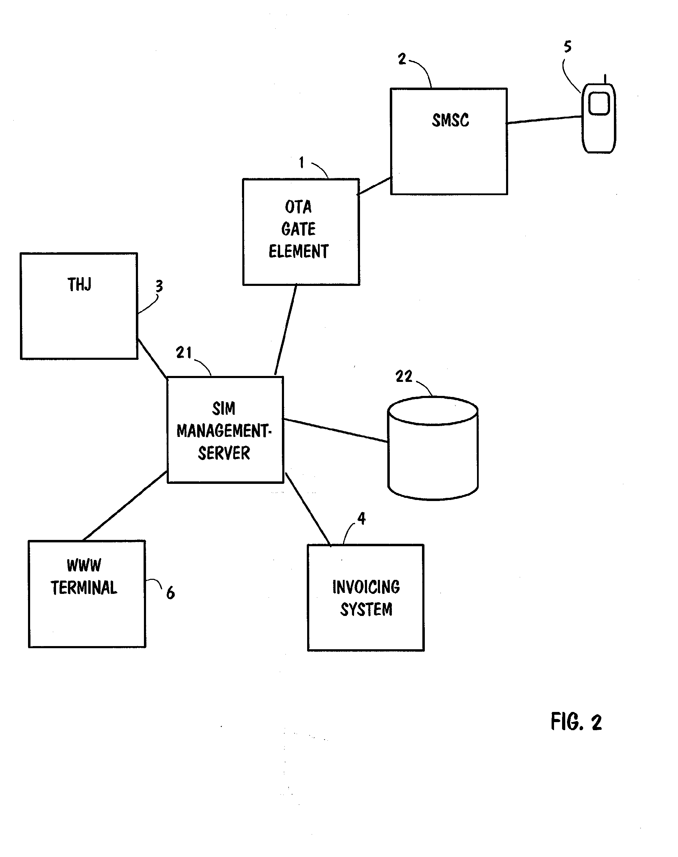

Figure 2 shows an example of the arrangement according to the invention. SIM management server 21 maintains and manages the information of SIMs in database 22 and attends to, for example, the updating of SIMs located in the subscriber terminals. The management server is connected both to the database and to subscriber management system 3, invoicing system 4, OTA gate element 1 and to possible one or more WWW terminals through the Internet.

When an operator or service supplier wishes to update the service application contained in the SIM, a service updating request (management command) is sent either from subscriber management system 3 or from WWW terminal 6 to the SIM management server. If the SIM's connection is not active, that is, the SIM is still in storage and no connection has been sold to the final user, an updating request is entered in the database. The updating request is performed upon activation of the connection. If the SIM's connection is active, the updating request and updating data will be sent to OTA gate element 1, which asks SMSC to send the updating data in short messages further to the terminal 5 containing the SIM in question by way of the network in use, such as GSM, GPRS or UMTS (Universal Telecommunications Mobile Service). The SIM is updated (the management command is carried out), whereafter a message acknowledging the updating is sent from the terminal to the SMCS, from which it is relayed further to the OTA gate element, which for its part delivers it to the SIM management server. On receiving the acknowledgement message, the SIM management server stores the new updated information on the SIM in the database of the SIMs.

The invoicing for updating of the service or the invoicing for some other service of the SIM utilises price information stored in database 22. For example, invoicing according to the invention for the updating of SIM service of the kind described above is by sending from SMSC log information through the OTA gate element to the SIM management server for invoicing. In this way the SIM management server receives time information and channel information on the service update. The price information is fetched from database 22, whence it is delivered to the management server. The SIM management server forms an invoicing message, which is sent to invoicing system 4, from which it is directed further to the party paying the invoice. Alternatively, the invoicing message may be sent directly to the SMSC, from which it is delivered to the invoicing system.

The above example described updating of a SIM, but it is obvious that the management command according to the invention and the management function/functions caused by it may also concern the SIM's service/application.

The centralized price information storage managed by the SIM management server allows using different price brackets for different services as well as a flexible changing of price brackets. Each service can be given a price of its own (the prices of different services are in different price brackets). Service prices may also be combined by choosing the same price bracket for the services. It is also possible for invoicing to be based on pricing of the service request, whereby all services included in the service request belong to the price of the service request, that is, to the price bracket being used. However, if some exceptional service is desired along with the service request, it is possible to form a separate invoice for this extra service along with the invoicing for the service request. As regards the foregoing it should be noted that the use of price brackets facilitates updating of prices.

Prices may also be tied to a certain time, whereby it is possible to carry out campaign prices of different kinds. Updating of a certain service to a new version may, for example, be with a discount of 30 % for the following week. As another extra possible feature of invoicing, the user may receive the information together with prices, for example, as a SMS message, about the updating of SIM (or about the service used). The user may also form a price information inquiry (for example, as a SMS message), which is sent from the user's terminal to the SIM management server. When the management server has checked the price information with the database, it can send an answer about the prices to the user's terminal. The operator or the holder of a certain SIM group may also check the price information, for example, by way of Internet terminal 6. Usually, the operator and SIM group holder also have the right to change the price information in the database. It is also possible to check all information of the SIM, that is, the services included in the SIM, their versions, etc ...

When the dealer sells a connection to the final user, it is activated. The user is given a connection number, which is combined with the terminal's SIM. Combining takes place in such a way that the dealer sets up a connection with the subscriber management system 3, where the connection is opened. In connection with the opening, the connection number is transferred to the SIM management server, which attends to its storing in the SIM's data in the database. In connection with the activation it is possible to perform updating of the SIM, if updating requests are found in the database (for example, a new version or a service desired by the subscriber) from the period when the SIM was non-active. Updating is carried out in the manner described in the foregoing.

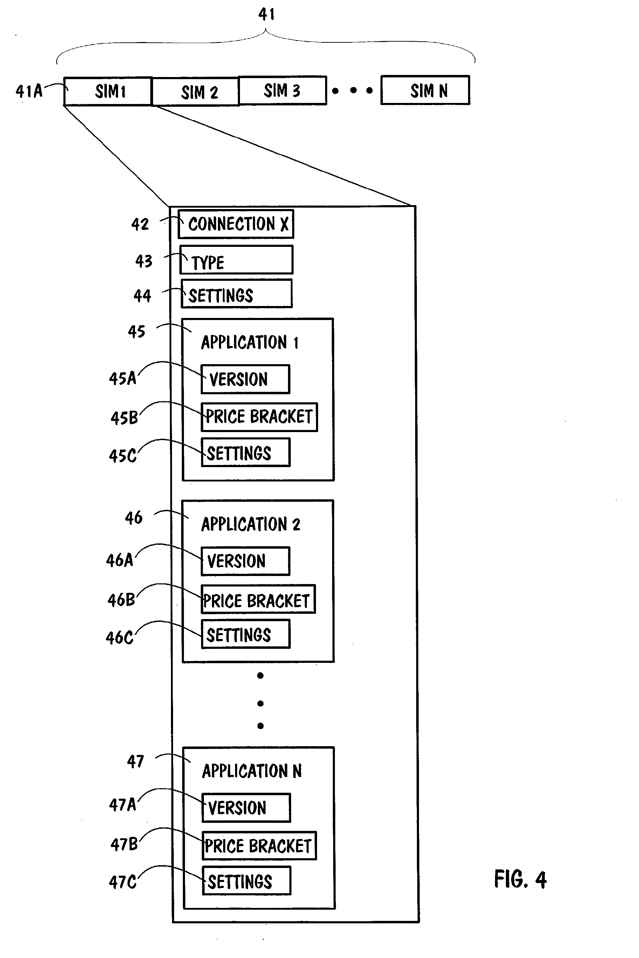

In order to get a better view of the information contained in the SIM, Figure 3 shows an example of the structure and content of SIM 31. SIM includes a processor 32 for the functions. In addition, the SIM often has a separate processor 33 for encrypting, that is, for encryption functions. The SIM's ROM (Read Only Memory) 34 includes the SIM's operating system and fixed applications of the SIM. The size of ROM is 8-64 kilobytes nowadays. The RAM (Read Access Memory) 35 includes editable information. For example, telephone numbers, 35A, text messages 35B, settings 35C and various applications 35D, 35E, 35F may be stored therein. SIMs also have EEPROM (Electronical Erasable Programable Read Only Memory) 36 very-often these days. The EEPROM includes, among other things, files used by the operating system. The EEPROM can be updated.

Figure 4 shows an example of information of SIMs 41 in the database managed by the SIM management server. The information of one SIM 41A is given a closer look. The SIM information includes a connection number 42 combined therewith. If there is no connection number, the SIM has not been activated. There are several different types of SIMs, so the SIM information also contains the SIM type 43. The information also described the settings 44 of the SIM (Figure 3, 35C) or the settings contained in EEPRO-Min). Application-specific information 45, 46, 47 may also be stored concerning applications (for example, Figure 3, 35D, 35E, 35F). The application information preferably includes the application version 45A, 46A, 47A, price bracket 45B, 46B, 47B and settings 45C, 46C, 47C. Naturally, the application information like the information of the whole SIM may also include other information than the information described herein.

It can be seen from the above description that the information of the SIM may also include version information of applications. This makes it easier to update applications to a new version and thus also to make sure a better functioning of the service applications.

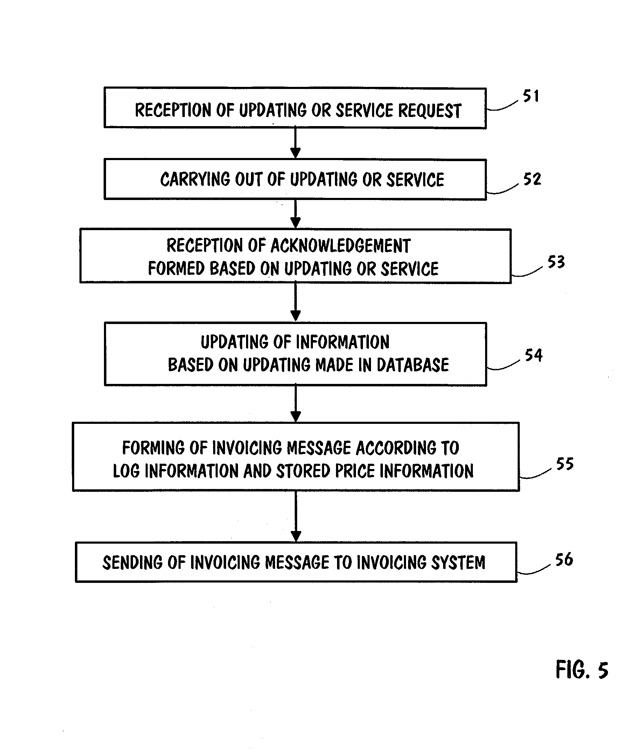

Figure 5 is a flow diagram showing an example of the method according to the invention. First, the SIM management server receives 51 an updating or management request (a management command). The request may have been formed by, for example, the final user, the operator or the holder of the SIM group. The request has been delivered to the SIM management server. The SIM management server begins carrying out 52 the desired request (carrying out of the management function begins) by checking whether the SIM is active or not. If the SIM is non-active, an entry of the request is made in the database in case it concerns updating. If the SIM is active, the request is directed to the element providing the service or updating (may be either in the SIM management server or in an external server). When the service or updating is ready for delivery to the final user, it is sent to him, preferably by way of the OTA gate element.

The terminal (such as a mobile phone) of the final user forwards the service or updating to the final user, whence an acknowledgement message is formed. The acknowledgement message is sent to the SIM management server, which receives it 53. In case of updating, the updating information is entered in the database in the information 54 of the SIM in question. The SIM management server has received log information from the network (in the case of SMS messages, from the SMSC). By using the log information and the price information entered in database 22 an invoicing message 55 is formed. The invoicing message is sent 56 to the network's invoicing system 4. Information on the invoicing and on the invoiced amount may also be sent to the final user.

The invention makes possible a very flexible functioning of SIM management. The SIM management server provides a view of the SIM for various groups of users, such as operators, content suppliers, users, etc... Thus, the SIM may be opened for many different quarters. This is possible with the aid of the centralized database and the server managing it, which form a view of the SIM permissible for each group of users. For example, the service supplier cannot get a look at services of another service supplier contained in the SIM. Thus, the SIM user also has the possibility to see and update the content of his SIM. However, even the user need not see all contents, such as, for example, settings necessary for the operator, and other such parties.

Each group of SIM users is allowed to update and check the contents of the SIM, for example, by way of the WWW browser. The WWW browser (or other terminal to be used) is the same for all user groups, so there is no need for user-specific management terminals. The SIM management server makes sure that each group of users has access only to the information to which it has permission. In working out the management terminal the use of STK is easier than before, because all its information is made visible from the SIM's contents.

Version management of applications contained in the SIM is also easy, because the current version information in the database facilitates updating of the applications to new versions. The version management according to the invention prolongs the useful life of the SIM as the useful life and functioning of applications are imrpoved. Thus, the SIM need not be renewed so often as has to be done when based on earlier solutions. The version management of non-active SIMs is also up to date, as was described in the foregoing. The applications of a non-active SIM may be updated either in connection with the activation of the SIM or when the user requests updating, whereby no unnecessary updating will be made (updating only if the application is really used).

Prices can be allocated with greater precision. In addition, it is possible to make price inquiries (the user may also inquire) and to form campaign prices. Invoicing is flexible, and expensive changes need not be made in existing systems in order to attend to the invoicing, as must be done in present-day solutions.

The invention also allows an improved management of connection numbers, because in the solutions of today the connection number cannot be determined with full freedom, but the SIM's number space is already limited when lying on the dealer's shelf. According to the invention, the connection number can be fully determined only on the dealer's premises in the sale situation.

It is also easier to form various customer type groups, to which type-specific services are offered. The type of customer is entered in the information of the SIM.

Although the invention has been described above with the aid of SMS data transfer based on GSM technology in connection with an OTA system, it is possible to use some other technique instead of SMS ― such as data transfer in accordance with the GPRS, IP or bluetooth technique.

The invention provides an excellent environment for implementing SIM solutions based on open environments of the future. Such will be, for example, solutions based on Java, among others, such as applications of the third generation now being planned. Based on the above description it is obvious that the invention is not limited to the examples mentioned in this text, but it can be applied in solutions of other kinds within the scope of the inventive idea.

## Claims

1. Method for management of SIMs, wherein a management command is formed concerning the desired SIM or SIMs, based on which command the desired management function is carried out, **characterized in that** in the method
- the management command is received in a separate SIM management server,
- the management function is carried out based on the received management command, so that the management function prepared by the SIM management server is sent to the terminal containing the SIM,
- an acknowledgement message is received of the management function completed by the terminal containing the SIM,
- the information of the SIM is updated when required based on the performed management function in a database in connection with the SIM management server, which database contains in a centralized fashion information concerning SIMs and price information concerning the management functions,
- network log information on the performed management functions is received in the SIM management server,
- an invoicing message is formed of the performed management functions based on the log information and price information, and
- the invoicing message is sent to the invoicing system.

2. Method according to claim 1, **characterized in that** the management command or management function concerns updating of the SIM or a desired service of the SIM.

3. Method according to claim 2, **characterized in that** the communication between the SIM management server and the terminal including the SIM is carried on by way of an OTA system.

4. Method according to claim 3, **characterized in that** in the OTA system SMS messages are formed, which are relayed to the terminal including the SIM.

5. Method according to claim 4, **characterized in that** the SMS messages travel through SMSC.

6. Method according to claim 3, **characterized in that** in the OTA system messages are formed according to the IP transfer path, which are relayed to the terminal including the SIM.

7. Method according to claim 3, **characterized in that** in the OTA system messages are formed according to the GPRS transfer path, which are relayed to the terminal including the SIM.

8. Method according to claim 3, **characterized in that** in the OTA system messages are formed according to the bluetooth transfer path, which are relayed to the terminal including the SIM.

9. Method according to any claim 2 - 8, **characterized in that** when the SIM is non-active, a management command concerning updating is entered in the memory, so that it can be carried out later, when the SIM is active.

10. Method according to any claim 2 - 9, **characterized in that** a management command concerning updating of the SIM updates the application which the SIM concerns to a new version, and the new version information is entered in the information of the SIM contained in the database.

11. Method according to any claim 2 - 10, **characterized in that** the price information consists of prices entered in price brackets.

12. Method according to any claim 2-11, **characterized in that** the price information in the database is updated according to need.

13. Method according to any claim 2 - 12, **characterized in that** the SIM information and price information contained in the database is updated by using a terminal in connection with the SIM management server.

14. Method according to claim 13, **characterized in that** the terminal is a device using an Internet browser.

15. Method according to claim 13, **characterized in that** the terminal is a THJ system terminal or a terminal containing the SIM.

16. Method according to any claim 2 - 15, **characterized in that** of the invoicing message a message containing the invoiced amount is sent to the terminal including the SIM.

17. An arrangement for management of SIMs, wherein a management command is formed concerning the desired SIM or SIMs, based on which command the desired management function is carried out, **characterized in that** the arrangement includes a SIM management server and a database connected therewith, which management server is adapted
- to receive management commands,
- to carry out management functions based on the received management command, so that management functions prepared by the SIM management server are sent to the terminals which the functions concern and which include the SIMs,
- to receive acknowledgement messages of the management functions completed by the terminals including the SIM,
- to update when needed the information of the SIM based on the performed management functions in a database, which includes in a centralized fashion information concerning the SIMs and price information concerning the management functions,
- to receive network log information on the performed management functions,
- to form of the performeed management functions invoicing messages based on the log information and price information, and
- to send the invoicing messages to the invoicing system, which is in connection with the SIM management unit.

18. Arrangement according to claim 17, **characterized in that** communication between the SIM management server and the terminal including the SIM takes place by way of the OTA system.

19. Arrangement according to claim 18, **characterized in that** in the OTA system SMS messages are formed, which are relayed to the terminal including the SIM.

20. Arrangement according to claim 19, **characterized in that** the SMS messages travel through the SMSC.

21. Arrangement according to claim 18, **characterized in that** in the OTA system messages are formed according to the IP transfer path, which messages are relayed to the terminal including the SIM by way of the IP transfer path.

22. Arrangement according to claim 18, **characterized in that** in the OTA system messages are formed according to the GPRS transfer path, which messages are relayed to the terminal including the SIM by way of the GPRS transfer path.

23. Arrangement according to claim 18, **characterized in that** in the OTA system messages are formed according to the bluetooth transfer path, which messages are relayed to the terminal including the SIM by way of the bluetooth transfer path.

24. Arrangement according to any claim 17-23, **characterized in that** the management command and the management function concern updating of the SIM or a desired service of the SIM.

25. Arrangement according to claim 24, **characterized in that** the SIM information and price information contained in the database is updated by using a terminal in connection with the SIM management server.

26. Arrangement according to claim 25, **characterized in that** the terminal is a device using an Internet browser, a THJ system terminal or a terminal containing a SIM.

27. Arrangement according to claim 25 or 26, **characterized in that** when the SIM is non-active, a management command concerning updating is entered in the memory, so that it can be carried out later, when the SIM is active.

28. Arrangement according to claim 25, 26 or 27, **characterized in that** a management command concerning updating of the SIM updates the application which the SIM concerns to a new version, and the new version information is entered in the SIM information contained in the database.

29. Arrangement according to claim 28, **characterized in that** the price information of the database is updated according to need.
